# EUROPEAN PATENT APPLICATION

(11) **EP 4 832 087 A1**
(43) Date of publication of application: **28.10.2026**
(21) Application number: 24908056.5
(22) Date of filing: 18.12.2024
(51) Int. Cl.: H01M 4/36, H01M 4/131, H01M 10/052, H01M 4/02

(54) **CATHODE ACTIVE MATERIAL FOR ALL-SOLID BATTERY, AND ALL-SOLID BATTERY COMPRISING SAME**

(30) Priority: 18.12.2023 KR 20230184843
(71) Applicant: POSCO Holdings Inc., Pohang-si, Gyeongsangbuk-do 37859 (KR)
(72) Inventor: LEE, Jaemyung, Pohang-si, Gyeongsangbuk-do 37859 (KR); MOON, Jiwoong, Pohang-si, Gyeongsangbuk-do 37859 (KR); KIM, Tae Chil, Pohang-si, Gyeongsangbuk-do 37859 (KR); PARK, Chi Rook, Pohang-si, Gyeongsangbuk-do 37859 (KR); LEE, Sung Yon, Pohang-si, Gyeongsangbuk-do 37859 (KR)
(74) Representative: Pfenning, Meinig & Partner mbB
(86) International application number: PCT/KR2024/020588
(87) International publication number: WO 2025/135773

(57) **Abstract**

The present invention relates to a positive electrode active material for an all-solid-state battery, the positive electrode active material being in the form of secondary particles formed by aggregation of a plurality of primary particles, wherein the secondary particles have an average particle diameter (D50) of 2 to 7 µm, and the positive electrode active material has a particle surface aspect resistance (PSAR) of 5 to 9 kΩ·µm².

## Description

### [TECHNICAL FIELD]

The present invention relates to a positive electrode active material for an all-solid-state battery and an all-solid-state battery including the same.

### [BACKGROUND ART]

As research on safety problems and energy density of high-capacity batteries has attracted attention, all-solid-state batteries have been spotlighted as next-generation batteries.

Since an all-solid-state battery replaces a liquid electrolyte, which may cause explosion, with a solid electrolyte, a flammable solvent is not used in the battery, and ignition or explosion due to reactions such as decomposition reactions of a conventional electrolyte solution does not occur at all, thereby securing safety of the battery.

In addition, since lithium metal or a lithium alloy can be used as a negative electrode material, energy density with respect to the mass and volume of the battery can be improved.

However, since a solid electrolyte generally has lower lithium ion conductivity than a liquid electrolyte, improvement of rate characteristics is an important technical problem in an all-solid-state battery.

### [DETAILED DESCRIPTION OF THE INVENTION]

### [Technical Problem]

Accordingly, one object of the present invention is to provide a positive electrode active material for an all-solid-state battery having improved rate characteristics, and an all-solid-state battery including the same.

### [Technical Solution]

One embodiment of the present invention provides a positive electrode active material for an all-solid-state battery, the positive electrode active material being in the form of secondary particles formed by aggregation of a plurality of primary particles, wherein the secondary particles have an average particle diameter (D50) of 2 to 7 µm, and the positive electrode active material has a particle surface aspect resistance (PSAR) of 5 to 9 kΩ·µm².

The positive electrode active material may include a lithium metal oxide having a nickel-containing layered crystal structure and a coating layer disposed on the lithium metal oxide.

A content of nickel in the lithium metal oxide may be 70 mol% or more based on a total number of moles of metals excluding lithium.

The coating layer may contain a lithium-ion-conductive oxide.

The lithium-ion-conductive oxide may be represented by the following Chemical Formula 1.

[Chemical Formula 1] Liₓ₁D_{y1}O_{z1}

In Chemical Formula 1, 0≤x1≤3, 0<y1≤2, and 0<z1≤4, and D is Zr, Nb, Ti, V, B, P, or a combination thereof.

The lithium-ion-conductive oxide may be represented by the following Chemical Formula 2.

[Chemical Formula 2] Liₓ₂Zr_{y2}O_{z2}

In Chemical Formula 2, 0.5≤x2≤2.2, 0.9≤y2≤1.1, and 2.6≤z≤3.4.

The lithium metal oxide may be represented by the following Chemical Formula 3.

[Chemical Formula 3] Liₐ[Niₓ₃Co_{y3}Mn_{z3}M_{w}]O₂

In Chemical Formula 3, 0.8≤a≤1.3, 0.7≤x3<1, 0≤y3≤0.3, 0≤z3≤0.3, and 0≤w≤0.2, x3+y3+z3+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a positive electrode for an all-solid-state battery including the above-described positive electrode active material.

Still another embodiment of the present invention provides an all-solid-state battery including the positive electrode for an all-solid-state battery.

### [Advantageous Effects]

The positive electrode active material for an all-solid-state battery according to one embodiment of the present invention may have improved rate characteristics by controlling a particle surface aspect resistance.

### [BRIEF DESCRIPTION OF THE DRAWINGS]

FIG. 1 is an example of an SEM image of a positive electrode active material for an all-solid-state battery.
FIG. 2 is an image segmented into individual primary particle units, derived from the SEM image of FIG. 1 using image software.
FIG. 3 is a conceptual diagram showing a process of obtaining an average active area by assuming primary particles to be spherical.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combination(s) thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

### 1. Positive Electrode Active Material for All-Solid-State Battery

An all-solid-state battery generally uses inorganic solid electrolyte powder as an electrolyte and, unlike a general lithium ion battery using a liquid electrolyte, characteristics thereof greatly depend on a surface contact area between a positive electrode active material and a solid electrolyte, surface reaction characteristics, and whether physical surface contact is maintained after expansion/contraction during charging and discharging.

In particular, since a solid electrolyte generally has an issue of having lower ionic conductivity than a liquid electrolyte, research on quantitative physical properties of a positive electrode active material for an all-solid-state battery capable of improving rate characteristics is required.

Accordingly, as a result of repeated studies on a method capable of improving rate characteristics of an all-solid-state battery, the present inventors found that it is important to control a particle surface aspect resistance (PSAR), which is calculated using a surface contact area between the positive electrode active material for an all-solid-state battery and a solid electrolyte, hereinafter referred to as an "active area" in the present specification, and a resistance of the positive electrode active material, thereby completing the present invention.

More specifically, the positive electrode active material for an all-solid-state battery according to one embodiment of the present invention may be in the form of secondary particles formed by aggregation of a plurality of primary particles.

In the present specification, "secondary particle" means an aggregate, that is, a secondary structure, in which tens to hundreds of primary particles are aggregated by physical or chemical bonding between primary particles even without an intentional aggregation or granulation process for the primary particles.

In addition, "primary particle" means a minimum particle unit distinguished as one lump when a cross-section of a positive electrode active material is observed through a scanning electron microscope (SEM), and may be composed of one crystal grain or a plurality of crystal grains.

In addition, "crystal grain" means a distinguishable region in a primary particle in which atoms form a lattice structure in a certain direction.

In addition, the secondary particles may have an average particle diameter (D50) of 2 to 7 µm, and more specifically 3 to 6 µm. When the average particle diameter (D50) of the secondary particles is too small, a positive electrode mixture density may be too low, making it difficult to implement high energy density. When the average particle diameter (D50) of the secondary particles is too large, a movement path of lithium ions in the positive electrode active material becomes too long, and thus rate characteristics and resistance characteristics may deteriorate. In addition, when the average particle diameter (D50) of the secondary particles satisfies the above range, the effect of improving rate characteristics by controlling the particle surface aspect resistance of the positive electrode active material, which will be described later, within the range according to the present invention can be more preferably implemented.

In the present specification, the average particle diameter (D50) may be defined as a particle diameter corresponding to 50% of a cumulative volume in a particle diameter distribution curve of particles. The average particle diameter (D50) may be measured, for example, using a laser diffraction method.

In particular, the positive electrode active material for an all-solid-state battery according to one embodiment of the present invention has a particle surface aspect resistance (PSAR) of 5 to 9 kΩ·µm², and more specifically 5 to 8 kΩ·µm².

The particle surface aspect resistance may be calculated by multiplying an average active area of the positive electrode active material by a resistance of the positive electrode active material.

That is, the particle surface aspect resistance may satisfy the following Relationship 1. [Relationship 1] 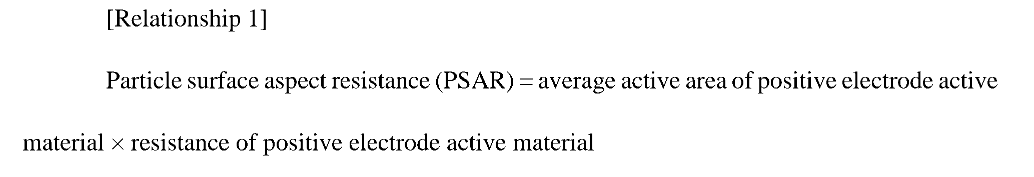 Particle surface aspect resistance (PSAR) = average active area of positive electrode active material × resistance of positive electrode active material

At this time, in the present specification, an "active area" of the positive electrode active material means a surface contact area between the positive electrode active material and the solid electrolyte.

First, a method for deriving the average active area of the positive electrode active material will be described.

The average active area of the positive electrode active material may be obtained using an SEM image of the positive electrode active material and image software as in the method below.

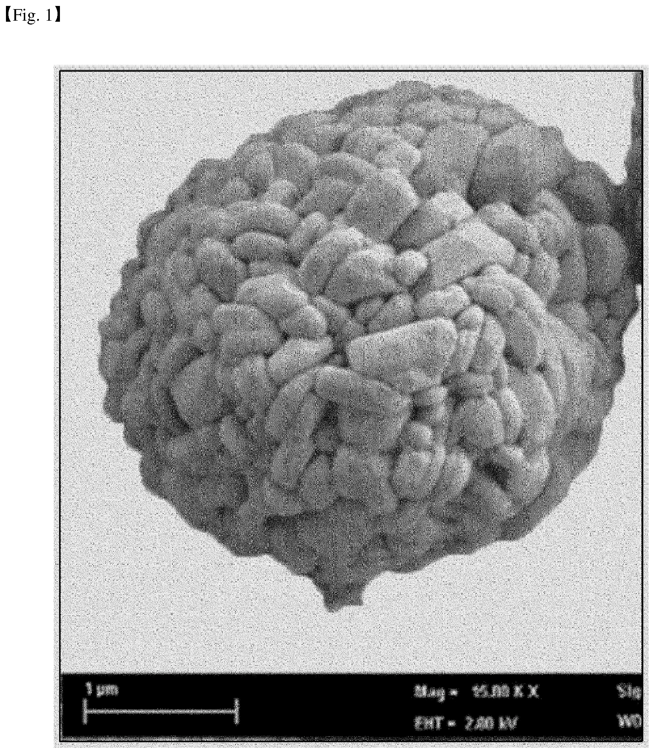

More specifically, first, an SEM (scanning electron microscope) image of a positive electrode active material for an all-solid-state battery in the form of secondary particles formed by aggregation of a plurality of primary particles is derived. FIG. 1 is an example of an SEM image of a positive electrode active material for an all-solid-state battery.

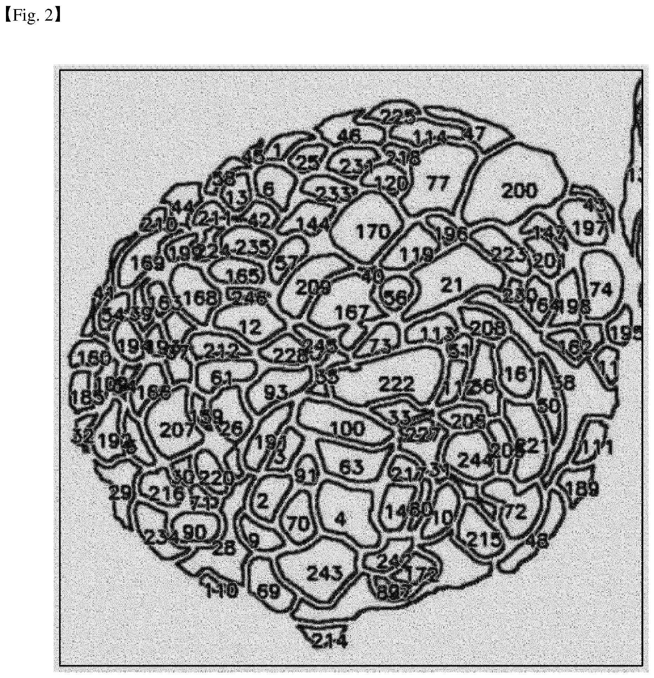

Next, from the SEM image, an average radius of primary particles and an average number of primary particles present in a secondary particle are derived. FIG. 2 is an example of a software image showing a process of deriving an average radius of primary particles and an average number of primary particles present in a secondary particle.

Referring to FIG. 2, an image segmented into individual primary particle units may be derived by removing boundaries of individual primary particles in the secondary particle through image software and then detecting outlines of the individual primary particles. Through such a software image, an average radius of the primary particles and an average number of primary particles present in the secondary particle can be derived. Meanwhile, at this time, the number of primary particles means the number of primary particles positioned at a surface portion of the positive electrode active material observed on a two-dimensional SEM image, and does not mean the number of all primary particles actually present in the three-dimensional positive electrode active material.

At this time, the derived average radius of the primary particles may be an area-based average radius calculated based on an area of the primary particles. More specifically, the area-based average radius may be calculated by measuring, through image software, an area (pixel) occupied by each primary particle in the secondary particle in the SEM image derived from the first step, specifying a radius of a circle having the same area as the radius of each primary particle, and obtaining an average value of the radii of the individual primary particles in the secondary particle.

Meanwhile, the derived average radius of the primary particles and the average number of primary particles present in the secondary particle may be average values of values measured for 10 arbitrary different secondary particles in a positive electrode active material sample. Through this, measurement deviation and error can be reduced.

Next, an average active area is derived from the derived average radius of the primary particles and the average number of primary particles present in the secondary particle.

At this time, the derived average active area may be a sphere-based average active area derived by assuming the primary particles to be spherical.

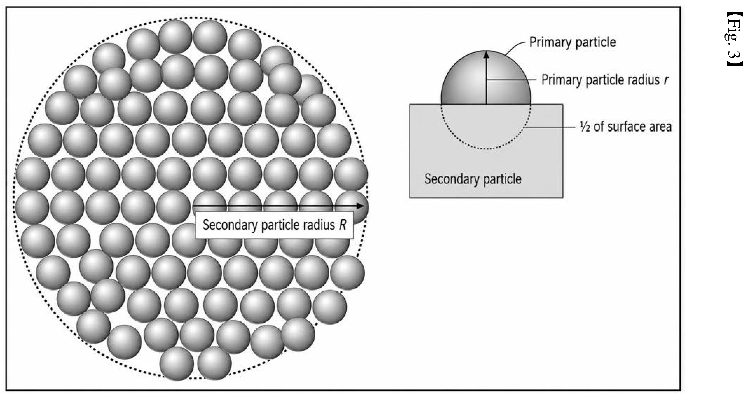

More specifically, FIG. 3 is a conceptual diagram showing a process of deriving a sphere-based average active area by assuming the primary particles to be spherical. Referring to FIG. 3, the sphere-based average active area may be calculated by the following method. First, the average radius of the primary particles derived by the above method is assumed to be the radius of a spherical particle. Then, half of the total area of the spherical particle is assumed to be an active area directly contacting the solid electrolyte. Then, the active area of each primary particle derived therefrom is multiplied by the average number of primary particles present in the secondary particle, thereby calculating the average active area of the positive electrode active material.

Next, a method for measuring the resistance of the positive electrode active material will be described.

The resistance of the positive electrode active material may be measured by using a surface resistance analyzer with positive electrode active material powder in a pressed form. At this time, measurement may be performed by maintaining a measurement pressure of 25 MPa for 15 seconds, with the diameter of a sample being about 11 mm.

The particle surface aspect resistance of the positive electrode active material can be obtained by multiplying the average active area of the positive electrode active material derived by the series of methods by the resistance.

At this time, the particle surface aspect resistance of the positive electrode active material according to the present invention is 5 to 9 kΩ·µm², and more specifically may be 5 to 8 kΩ·µm².

The present inventors calculated the particle surface aspect resistance for secondary-particle positive electrode active materials for all-solid-state batteries by the above method, and experimentally studied the correlation between these particle surface aspect resistance values and capacity or rate characteristics of all-solid-state batteries. As a result, the present inventors found that rate characteristics are particularly maximized when the particle surface aspect resistance satisfies the above range. The present inventors believe that this is attributable to the following reasons. The resistance of a positive electrode active material means the sum of resistance elements that impede the flow of charge passing through the positive electrode material. This is because not only resistance characteristics of the material itself but also the influence of an area through which charges flow, that is, an active area, acts in combination. That is, even for the same material, when a contact area, that is, an active area, is small, resistance is measured to be large. In addition, during low-rate discharge, the influence of other physical properties is relatively large, and thus matching between the particle surface aspect resistance and charge/discharge capacity is not high. However, during high-rate discharge, the influence of resistance relatively increases, so that matching between the particle surface aspect resistance and charge/discharge capacity increases. Accordingly, the particle surface aspect resistance according to the present invention is a parameter considering both resistance of the positive electrode material and an area through which charges flow, that is, an active area, and is considered to have a particularly high correlation with charge/discharge capacity during high-rate discharge.

Hereinafter, other configurations of the positive electrode active material for an all-solid-state battery according to one embodiment of the present invention will be described in more detail.

The positive electrode active material for an all-solid-state battery according to one embodiment of the present invention may include a lithium metal oxide having a nickel-containing layered crystal structure and a coating layer disposed on the lithium metal oxide.

The lithium metal oxide having a nickel-containing layered crystal structure may further include nickel and, if necessary, cobalt and/or manganese, and may further include other doping elements.

At this time, the content of nickel in the lithium metal oxide may be 70 mol% or more, and more specifically 75 mol% or 80 mol% or more, based on the total number of moles of metals excluding lithium. Accordingly, high capacity characteristics of a battery can be implemented.

In addition, the coating layer may contain a lithium-ion-conductive oxide. Since the coating layer contains a lithium-ion-conductive oxide, not only the effect of improving lifespan characteristics by suppressing side reactions with the electrolyte through coating layer coverage, but also the effect of preserving capacity and rate characteristics can be simultaneously implemented.

Meanwhile, the coating layer may be formed by a wet coating method using fluidized coating layer equipment. Accordingly, the entire surface of the lithium metal oxide secondary particles can be covered with a coating layer having a very thin and homogeneous thickness, and thus effects due to coating layer coverage can be more preferably implemented.

More specifically, the lithium-ion-conductive oxide may be represented by the following Chemical Formula 1.

[Chemical Formula 1] Liₓ₁D_{y1}O_{z1}

In Chemical Formula 1, 0≤x1≤3, 0<y1≤2, and 0<z1≤4, and D is Zr, Nb, Ti, V, B, P, or a combination thereof.

More specifically, the lithium-ion-conductive oxide may be represented by the following Chemical Formula 2.

[Chemical Formula 2] Liₓ₂Zr_{y2}O_{z2}

In Chemical Formula 2, 0.5≤x2≤2.2, 0.9≤y2≤1.1, and 2.6≤z≤3.4.

More specifically, the lithium metal oxide may be represented by the following Chemical Formula 3.

[Chemical Formula 3] Liₐ[Niₓ₃Co_{y3}Mn_{z3}M_{w}]O₂

In Chemical Formula 3, 0.8≤a≤1.3, 0.7≤x3<1, 0≤y3≤0.3, 0≤z3≤0.3, and 0≤w≤0.2, x3+y3+z3+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in a content corresponding to a, that is, 0.8≤a≤1.3. When a is too small, capacity may be reduced. When a is too large, the strength of the calcined positive electrode active material increases, so pulverization may be difficult, and gas generation may increase due to an increase in lithium by-products. Considering an effect of improving capacity characteristics of the positive electrode active material according to control of the lithium content and a balance of sinterability during manufacture of the active material, the lithium may more preferably be included in a content of 0.9≤a≤1.1.

In the lithium metal oxide of Chemical Formula 1, nickel may be included in a content corresponding to x3, that is, 0.7≤x3<1, and more specifically may be included in a content of 0.75≤x3<1 or 0.80≤x3<1. When the content of nickel satisfies the above range, high capacity of a battery can be achieved.

In the lithium metal oxide of Chemical Formula 1, cobalt may be included in a content corresponding to y3, that is, 0≤y3≤0.3. When the cobalt content is too small, growth of crystal grain size may be inhibited, and output characteristics may be reduced. When the cobalt content is too large, manufacturing costs may increase and reversible capacity may decrease.

In the lithium metal oxide of Chemical Formula 1, manganese may be included in a content corresponding to z3, that is, 0≤z3≤0.3. When the manganese content is too small, production costs may increase and active material stability may decrease. When the manganese content is too large, capacity and output characteristics of the battery may decrease.

In the lithium metal oxide of Chemical Formula 1, M, which is another doping element, may be included in a content corresponding to w, that is, 0≤w1≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement the other doping effect.

### 2. All-Solid-State Battery

Another embodiment of the present invention provides a positive electrode including the above-described positive electrode active material for an all-solid-state battery.

More specifically, the positive electrode may include a positive electrode current collector and a positive electrode active material layer disposed on the positive electrode current collector, and the positive electrode active material layer may include the above-described positive electrode active material for an all-solid-state battery, a sulfide-based solid electrolyte, and a conductive material. In addition, the positive electrode active material layer may further include a binder.

At this time, the sulfide-based solid electrolyte may be, for example, a sulfide-based solid electrolyte having an argyrodite-based crystal structure.

The sulfide-based solid electrolyte having an argyrodite-based crystal structure may be, for example, Li₆PS₅Cl, Li₆PS₅Br, Li₆PS₅I, or a combination thereof, but is not limited thereto.

At least a portion of the crystal structure of the sulfide-based solid electrolyte having an argyrodite-based crystal structure may be doped with a doping element.

The conductive material may be, for example, graphite, carbon black, acetylene black, Ketjen black, carbon nanofibers, carbon nanotubes, or a combination thereof.

The binder may be, for example, polyvinylidene fluoride, styrene butadiene rubber (SBR), polytetrafluoroethylene, polyvinylidene fluoride, vinylidene fluoride/hexafluoropropylene copolymer, polyacrylonitrile, polymethyl methacrylate, or a combination thereof.

The positive electrode active material layer may further include additives such as, for example, a filler, a coating agent, a dispersant, and an ion-conductive auxiliary agent, in addition to the above-described positive electrode active material, solid electrolyte, binder, and conductive material.

Still another embodiment of the present invention provides an all-solid-state battery including a positive electrode, a negative electrode, and a solid electrolyte layer disposed therebetween, wherein the positive electrode includes the above-described positive electrode active material for an all-solid-state battery.

The description of the positive electrode is the same as described above, and thus will be omitted.

The solid electrolyte layer may include a sulfide-based solid electrolyte.

The sulfide-based solid electrolyte may be, for example, an argyrodite-type compound including at least one selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. In particular, the sulfide-based solid electrolyte may be an argyrodite-type compound including at least one selected from Li₆PS₅Cl, Li₆PS₅Br, and Li₆PS₅I. However, the present invention is not limited thereto.

At least a portion of the crystal structure of the above-described argyrodite-type compound of the sulfide-based solid electrolyte may be doped with a doping element.

The solid electrolyte layer may further include a binder. Examples of the binder included in the solid electrolyte layer may include, but are not limited to, styrene butadiene rubber (SBR), polytetrafluoroethylene, polyvinylidene fluoride, polyethylene, and the like, and any binder used as a binder in the art may be used. The binder of the solid electrolyte layer may be the same as or different from the binder included in the positive electrode active material layer and the negative electrode active material layer.

The negative electrode may include a negative electrode current collector and a negative electrode active material layer disposed on the negative electrode current collector, and the negative electrode active material layer may include a negative electrode active material.

The negative electrode active material includes a material capable of reversible intercalation/deintercalation of lithium ions, lithium metal, an alloy of lithium metal, a material capable of doping and dedoping lithium, or a transition metal oxide.

As the material capable of reversible intercalation/deintercalation of lithium ions, any carbon-based negative electrode active material generally used in a lithium ion secondary battery may be used as a carbon material, and representative examples thereof may include crystalline carbon, amorphous carbon, or both thereof. Examples of the crystalline carbon may include graphite such as amorphous, plate-shaped, flake-shaped, spherical, or fiber-type natural graphite or artificial graphite. Examples of the amorphous carbon may include soft carbon, hard carbon, mesophase pitch carbide, calcined coke, and the like.

As the alloy of lithium metal, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

Examples of the material capable of doping and dedoping lithium may include Si, SiOₓ (0<x<2), a Si-Y alloy, wherein Y is an element selected from the group consisting of alkali metals, alkaline earth metals, Group 13 elements, Group 14 elements, transition metals, rare earth elements, and combinations thereof, and is not Si, Sn, SnO₂, Sn-Y, wherein Y is an element selected from the group consisting of alkali metals, alkaline earth metals, Group 13 elements, Group 14 elements, transition metals, rare earth elements, and combinations thereof, and is not Sn, and the like, and at least one of these may also be mixed with SiO₂ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

Examples of the transition metal oxide may include vanadium oxide, lithium vanadium oxide, and the like.

The negative electrode active material layer also includes a binder, and may optionally further include a conductive material.

The binder serves to allow negative electrode active material particles to adhere well to each other and also to allow the negative electrode active material to adhere well to a current collector. Representative examples thereof may include polyvinyl alcohol, carboxymethyl cellulose, hydroxypropyl cellulose, polyvinyl chloride, carboxylated polyvinyl chloride, polyvinyl fluoride, polymers including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but are not limited thereto.

The conductive material is used to impart conductivity to the electrode, and any conductive material may be used as long as it is an electron-conductive material without causing a chemical change in the battery to be configured. Examples thereof may include carbon-based materials such as natural graphite, artificial graphite, carbon black, acetylene black, Ketjen black, and carbon fibers; metal-based materials such as metal powder or metal fibers of copper, nickel, aluminum, silver, and the like; conductive polymer materials such as polyphenylene derivatives; or conductive materials including mixtures thereof.

As the current collector, one selected from the group consisting of copper foil, nickel foil, stainless steel foil, titanium foil, nickel foam, copper foam, a polymer substrate coated with a conductive metal, and combinations thereof may be used.

Hereinafter, embodiments of the present invention will be described in more detail through Examples. However, the following Examples are merely preferred embodiments of the present invention, and the present invention is not limited by the following Examples.

### Example 1

### (1) Manufacture of Positive Electrode Active Material

(Formation of Lithium Metal Oxide) A metal hydroxide precursor having a composition of Ni₀.₈₅Co₀.₁₂Mn₀.₀₃(OH)₂ and LiOH·H₂O as a lithium raw material were mixed at a molar ratio of 1:1.02 to form a mixture.

1 kg of the mixture was charged into a tube furnace and calcined at a temperature of 720°C for 8 hours. During calcination, pure O₂ was supplied so that an O₂ concentration of 99% or more could be maintained, thereby forming a lithium metal oxide having a composition of LiNi₀.₈₅Co₀.₁₂Mn₀.₀₃O₂.

(Preparation of Coating Solution) Subsequently, lithium was dissolved in dehydrated ethanol, and zirconium(IV) tetrapropoxide (70 wt.% in 1-propanol) was added and stirred, thereby preparing a coating solution containing lithium ions and zirconium ions. At this time, the concentration of zirconium ions in the coating solution was 0.11 mol/L.

(Spraying of Coating Solution) 420 mL of the coating solution was sprayed onto 1 kg of the formed lithium transition metal oxide using a fluidized coating apparatus (MP-01, manufactured by POWREX).

(Coating Heat Treatment) Thereafter, the lithium transition metal oxide onto which the coating solution had been sprayed was charged into a saggar and then heat-treated at 300°C for 3 hours while supplying oxygen into a box-type electric furnace, thereby manufacturing a positive electrode active material in which a Li₂ZrO₃ amorphous coating layer was formed on the surface of the lithium transition metal oxide.

### (2) Manufacture of Lithium Secondary Battery

75 wt% of the manufactured positive electrode active material, 22 wt% of an argyrodite solid electrolyte (Li₆PS₅Cl), and 3 wt% of Super C65 as a conductive material were well mixed with a solvent in which a small amount of binder was dissolved, thereby preparing a mixed paste. An electrode plate was manufactured using the mixed paste and dried, thereby manufacturing a composite electrode plate for a positive electrode.

100 mg of an argyrodite solid electrolyte (Li₆PS₅Cl) serving as a separator was first charged into a jig for evaluating an all-solid-state battery, pressed at 300 MPa or more to have a thickness of about 800 µm, and then a positive electrode plate was inserted on one surface thereof and secondarily pressed to manufacture a positive electrode part.

Thereafter, a Li-In alloy was inserted on the other surface, and an appropriate pressure was applied, thereby manufacturing a battery for evaluating an all-solid-state battery.

### Example 2

A positive electrode active material and an all-solid-state battery were manufactured in the same manner as in Example 1, except that, in the step of forming the lithium metal oxide, a metal hydroxide precursor having a composition of Ni₀.₈₅Co₀.₁₂Mn₀.₀₃(OH)₂ and LiOH·H₂O as a lithium raw material were mixed at a molar ratio of 1:1.03, and the calcination temperature was set to 730°C.

### Example 3

A positive electrode active material and an all-solid-state battery were manufactured in the same manner as in Example 1, except that, in the step of forming the lithium metal oxide, the calcination temperature was set to 730°C.

### Comparative Example 1

A positive electrode active material and an all-solid-state battery were manufactured in the same manner as in Example 1, except that, in the step of forming the lithium metal oxide, a metal hydroxide precursor having a composition of Ni₀.₈₃Co₀.₁₂Mn₀.₀₅(OH)₂ and LiOH·H₂O as a lithium raw material were mixed at a molar ratio of 1:1.03.

### Comparative Example 2

A positive electrode active material and an all-solid-state battery were manufactured in the same manner as in Example 1, except that, in the step of forming the lithium metal oxide, a metal hydroxide precursor having a composition of Ni₀.₈₃Co₀.₁₂Mn₀.₀₅(OH)₂ and LiOH·H₂O as a lithium raw material were mixed at a molar ratio of 1:1.03, and the calcination temperature was set to 730°C.

### Comparative Example 3

A positive electrode active material and an all-solid-state battery were manufactured in the same manner as in Example 1, except that, in the step of forming the lithium metal oxide, a metal hydroxide precursor having a composition of Ni₀.₈₅Co₀.₁₂Mn₀.₀₃(OH)₂ and LiOH·H₂O as a lithium raw material were mixed at a molar ratio of 1:1.03, and the calcination temperature was set to 730°C.

Tables 1 and 2 below summarize results of Experimental Examples 1 and 2, which will be described later.

**[Table 1]**

| | Average Particle Diameter of Secondary Particles (D50, µm) | Average Radius of Primary Particles (µm) | Average Number of Primary Particles in Secondary Particle | Average Active Area (µm²) | Resistance (Ω) | PSAR (kΩ· µm²) |
|---|---|---|---|---|---|---|
| Example 1 | 3.862 | 0.229 | 276.000 | 91.261 | 76.49 | 6.98 |
| Example 2 | 4.180 | 0.243 | 256.000 | 95.211 | 77.09 | 7.34 |
| Example 3 | 3.930 | 0.218 | 321.000 | 96.219 | 76.29 | 7.34 |
| Comparative Example 1 | 4.180 | 0.258 | 296.000 | 123.500 | 81.92 | 10.12 |
| Comparative Example 2 | 3.772 | 0.259 | 306.000 | 128.592 | 81.12 | 10.43 |
| Comparative Example 3 | 3.889 | 0.263 | 310.000 | 134.677 | 78.71 | 10.60 |

**[Table 2]**

| | Initial Capacity | | | Rate Characteristics | | | | |
|---|---|---|---|---|---|---|---|---|
| | Charge Capacity | Discharge Capacity | Initial Efficiency | 0.1C | 0.5C | 1.0C | 0.5C/0.1C | 1.0C/0.1C |
| | mAh/g | mAh/g | % | mAh/g | mAh/g | mAh/g | % | % |
| Example 1 | 226.223 | 213.175 | 0.942 | 212.448 | 197.139 | 184.540 | 92.794 | 86.863 |
| Example 2 | 226.295 | 212.636 | 0.940 | 211.976 | 196.929 | 181.258 | 92.901 | 85.509 |
| Example 3 | 221.603 | 209.582 | 0.946 | 209.130 | 193.900 | 177.009 | 92.717 | 84.641 |
| Comparative Example 1 | 215.499 | 203.050 | 0.942 | 202.448 | 184.619 | 166.039 | 91.193 | 82.015 |
| Comparative Example 2 | 216.774 | 205.779 | 0.949 | 205.291 | 188.197 | 168.098 | 91.673 | 81.883 |
| Comparative Example 3 | 220.853 | 208.040 | 0.942 | 207.505 | 188.226 | 166.949 | 90.709 | 80.456 |

### Experimental Example 1: Analysis of Physical Properties of Positive Electrode Active Material

### (1) Evaluation of Average Particle Diameter (D50) of Secondary Particles

With respect to active material powder, a particle diameter corresponding to 50% of a cumulative volume was measured using a laser diffraction method.

### (2) Evaluation of Average Radius of Primary Particles and Evaluation of Average Number of Primary Particles in Secondary Particle

An SEM (scanning electron microscope) image was derived from the positive electrode active material samples prepared in the Examples and Comparative Examples. The magnification of the SEM image was set to 15,000×.

Thereafter, an average radius of the primary particles and an average number of primary particles present in the secondary particle were derived from the SEM image. At this time, an area-based average radius was calculated.

Specifically, the area-based average radius was calculated by measuring, through image software, an area (pixel) occupied by each primary particle in the secondary particle in the SEM image derived from the first step, specifying a radius of a circle having the same area as the radius of each primary particle, and obtaining an average value of the radii of the individual primary particles in the secondary particle.

In addition, the number of primary particles present in the secondary particle was calculated from the SEM image through image software. At this time, the number of primary particles means the number of primary particles positioned at a surface portion of the positive electrode active material observed on a two-dimensional SEM image, and does not mean the number of all primary particles actually present in the three-dimensional positive electrode active material.

Meanwhile, the average radius of the primary particles and the average number of primary particles present in the secondary particle were finally derived as average values of values measured for 10 arbitrary different secondary particles in the positive electrode active material sample.

### (3) Evaluation of Average Active Area

An average active area was derived from the derived average radius of the primary particles and the average number of primary particles present in the secondary particle. At this time, a sphere-based average active area was derived.

Referring to FIG. 3, the sphere-based average active area may be calculated by the following method. First, the derived average radius of the primary particles is assumed to be the radius of a spherical particle. Then, half of the total area of the spherical particle is assumed to be an active area directly contacting the solid electrolyte. Then, the active area of each primary particle derived therefrom is multiplied by the average number of primary particles present in the secondary particle, thereby calculating the average active area of the positive electrode active material.

### (4) Evaluation of Resistance

The resistance of the positive electrode active material was measured by using a surface resistance analyzer with positive electrode active material powder in a pressed form. At this time, the measurement pressure was maintained at 25 MPa for 15 seconds, and the diameter of the sample was about 11 mm.

### (5) Evaluation of Particle Surface Aspect Resistance (PSAR)

The particle surface aspect resistance was calculated by multiplying the derived average active area by the resistance.

That is, the particle surface aspect resistance satisfies the following Relationship 1. [Relationship 1] 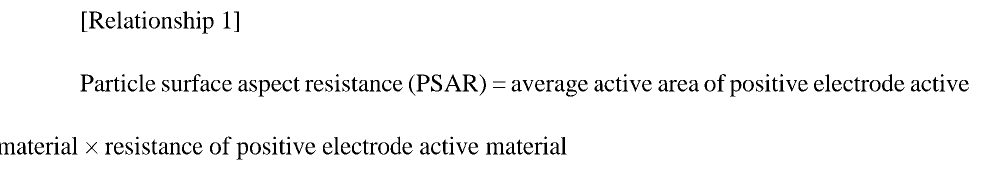 Particle surface aspect resistance (PSAR) = average active area of positive electrode active material × resistance of positive electrode active material

### Experimental Example 2: Evaluation of Electrochemical Characteristics of All-Solid-State Battery

### (1) Evaluation of Initial Capacity and Initial Efficiency

An all-solid-state battery half-cell was manufactured and aged at 25°C for 12 hours, and then a charge/discharge test was performed at 30°C. For initial capacity evaluation, charging was performed with a constant current of 0.1C up to 4.25 V based on a reference capacity of 210 mAh/g, then switched to a constant voltage, and charging was performed until the termination current reached 0.05C. After a rest time of 10 minutes after charging, discharging was performed with a constant current of 0.1C based on a reference capacity of 200 mAh/g until the voltage reached 2.5 V.

### (2) Evaluation of Rate Characteristics

Rate characteristics were evaluated by comparing an initial discharge capacity during 0.1C charge-0.1C discharge and an initial discharge capacity during 0.1C charge-0.5C/1.0C discharge.

Referring to Tables 1 and 2, it was confirmed that the derived particle surface aspect resistance (PSAR) of the positive electrode active material has a substantially linear-like correlation with, among electrochemical characteristics of an all-solid-state battery, particularly rate characteristics, and thus the correlation is very high.

Specifically, in the case of Examples 1 to 3, in which the particle surface aspect resistance was in a range of 5 to 9 kΩ·µm², it was confirmed that the 0.5C discharge capacity was 190 mAh/g or more, the 1.0C discharge capacity was 170 mAh/g or more, the 0.5C/0.1C rate characteristic was 92.0% or more, and the 1.0C/0.1C rate characteristic was 83.0% or more, which were implemented very excellently.

In contrast, in the case of Comparative Examples 1 to 3, in which the particle surface aspect resistance was outside the above range, it was confirmed that the 0.5C discharge capacity, the 1.0C discharge capacity, the 0.5C/0.1C rate characteristic, and the 1.0C/0.1C rate characteristic were lower than those of Examples 1 to 3.

Although preferred embodiments of the present invention have been described above, the present invention is not limited thereto, and various modifications can be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A positive electrode active material for an all-solid-state battery, the positive electrode active material being in the form of secondary particles formed by aggregation of a plurality of primary particles,
wherein the secondary particles have an average particle diameter (D50) of 2 to 7 µm, and
wherein the positive electrode active material has a particle surface aspect resistance (PSAR) of 5 to 9 kΩ·µm².

2. The positive electrode active material for an all-solid-state battery of claim 1,
wherein the positive electrode active material comprises a lithium metal oxide having a nickel-containing layered crystal structure and a coating layer disposed on the lithium metal oxide.

3. The positive electrode active material for an all-solid-state battery of claim 2,
wherein a content of nickel in the lithium metal oxide is 70 mol% or more based on a total number of moles of metals excluding lithium.

4. The positive electrode active material for an all-solid-state battery of claim 2,
wherein the coating layer contains a lithium-ion-conductive oxide.

5. The positive electrode active material for an all-solid-state battery of claim 4,
wherein the lithium-ion-conductive oxide is represented by the following Chemical Formula 1:
[Chemical Formula 1] Liₓ₁D_{y1}O_{z1}
wherein, in Chemical Formula 1, 0≤x1≤3, 0<y1≤2, and 0<z1≤4, and D is Zr, Nb, Ti, V, B, P, or a combination thereof.

6. The positive electrode active material for an all-solid-state battery of claim 4,
wherein the lithium-ion-conductive oxide is represented by the following Chemical Formula 2:
[Chemical Formula 2] Liₓ₂Zr_{y2}O_{z2}
wherein, in Chemical Formula 2, 0.5≤x2≤2.2, 0.9≤y2≤1.1, and 2.6≤z≤3.4.

7. The positive electrode active material for a lithium secondary battery of claim 2,
wherein the lithium metal oxide is represented by the following Chemical Formula 3:
[Chemical Formula 3] Liₐ[Niₓ₃Co_{y3}Mn_{z3}M_{w}]O₂
wherein, in Chemical Formula 3, 0.8≤a≤1.3, 0.7≤x3<1, 0≤y3≤0.3, 0≤z3≤0.3, and 0≤w≤0.2, x3+y3+z3+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

8. A positive electrode for an all-solid-state battery comprising the positive electrode active material of claim 1.

9. An all-solid-state battery comprising the positive electrode for an all-solid-state battery of claim 8.
